# EUROPÄISCHE PATENTSCHRIFT

(11) **EP 2 558 286 B1**
(45) Veröffentlichungstag und Bekanntmachung des Hinweises auf die Patenterteilung: **06.05.2015**
(21) Anmeldenummer: 11713997.2
(22) Anmeldetag: 29.03.2011
(51) Int. Cl.: B32B 1/08, B32B 27/08, F16L 9/12, F16L 11/08

(54) **FLEXIBLES ROHR MIT HÖHERER TEMPERATURBESTÄNDIGKEIT**
FLEXIBLE TUBE HAVING HIGH TEMPERATURE RESISTANCE
TUYAU FLEXIBLE À RÉSISTANCE THERMIQUE ACCRUE

(30) Priorität: 13.04.2010 DE 102010003920
(43) Veröffentlichungstag der Anmeldung: 20.02.2013
(73) Patentinhaber: Evonik Degussa GmbH, 45128 Essen (DE)
(72) Erfinder: KUHMANN, Karl, 48249 Dülmen (DE); DOWE, Andreas, 46325 Borken (DE); GÖRING, Rainer, 46325 Borken (DE)
(86) Internationale Anmeldenummer: PCT/EP2011/054773
(87) Internationale Veröffentlichungsnummer: WO 2011/128201

(56) Entgegenhaltungen:
- WO-A1-99/67560
- WO-A1-2005/028198
- WO-A1-2006/047774
- WO-A1-2007/096589
- WO-A1-2010/031844
- WO-A2-2006/059220

## Beschreibung

Gegenstand der vorliegenden Erfindung ist ein flexibles Rohr mehrschichtigen Aufbaus mit unverbundenen Schichten. Es wird im Folgenden der Einfachheit halber und dem englischen Sprachgebrauch entsprechend als Unbonded Flexible Pipe bezeichnet. Ein derartiges Rohr setzt der Diffusion von Gasen aus einem beförderten Fluid einen hohen Widerstand entgegen und kann daher mit besonderem Vorteil zur Beförderung von Rohöl, Erdgas, Methanol, CO₂ und dergleichen eingesetzt werden.

Unbonded Flexible Pipes sind als solche Stand der Technik. Derartige Rohre enthalten eine innere Auskleidung, üblicherweise in Form eines Kunststoffrohres, als Barriere gegen den Austritt des beförderten Fluids, sowie eine oder mehrere Armierungsschichten auf der Außenseite dieser inneren Auskleidung. Das Unbonded Flexible Pipe kann zusätzliche Schichten enthalten, beispielsweise eine oder mehrere Armierungsschichten auf der Innenseite der inneren Auskleidung, um das Zusammenfallen der inneren Auskleidung bei hohem Außendruck zu verhindern. Eine derartige innere Armierung wird üblicherweise als Karkasse bezeichnet. Darüber hinaus kann eine äußere Umhüllung enthalten sein, um eine Barriere gegen das Eindringen von Flüssigkeit aus der äußeren Umgebung in die Armierungsschichten oder weitere innen liegende polymere oder metallische Funktionsschichten vorzusehen.

Typische Unbonded Flexible Pipes sind beispielsweise in der WO 01/61232, der US 6 123 114 und der US 6 085 799 beschrieben; sie sind darüber hinaus in API Recommended Practice 17B, "Recommended Practice for Flexible Pipe", 3. Auflage, März 2002 sowie in API Specification 17J, "Specification for Unbonded Flexible Pipe" 2. Auflage, November 1999 näher charakterisiert.

Der Ausdruck "unbonded" bedeutet in diesem Zusammenhang, dass mindestens zwei der Schichten, einschließlich Armierungsschichten und Kunststoffschichten, nicht konstruktiv miteinander verbunden sind. In der Praxis enthält das Rohr mindestens zwei Armierungsschichten, die über die Rohrlänge hinweg weder direkt noch indirekt, d. h. über weitere Schichten, miteinander verbunden sind. Dadurch wird das Rohr biegsam und ausreichend flexibel, um es für Transportzwecke aufzurollen.

Derartige Unbonded Flexible Pipes werden in verschiedenen Ausführungen in Offshore-Anwendungen sowie in verschiedenen Onshore-Anwendungen für den Transport von Flüssigkeiten, Gasen und Aufschlämmungen eingesetzt. Sie können beispielsweise für den Transport von Fluiden dort eingesetzt werden, wo über die Länge des Rohres hinweg ein sehr hoher oder ein sehr unterschiedlicher Wasserdruck existiert, etwa in Form von Steigleitungen, die vom Meeresboden hoch zu einer Einrichtung an oder nahe der Meeresoberfläche verlaufen, ferner generell als Rohre für den Transport von Flüssigkeiten oder Gasen zwischen verschiedenen Einrichtungen, als Rohre, die in großer Tiefe auf dem Meeresboden verlegt sind, oder als Rohre zwischen Einrichtungen nahe der Meeresoberfläche.

In herkömmlichen flexiblen Rohren bestehen die Armierungsschicht oder die Armierungsschichten meistens aus spiralförmig angeordneten Stahldrähten, Stahlprofilen oder Stahlbändern, wobei die einzelnen Schichten mit verschiedenen Windungswinkeln relativ zur Rohrachse ausgebildet sein können. Es gibt daneben auch Ausführungsformen, bei denen mindestens eine Armierungsschicht bzw. alle Armierungsschichten aus Fasern bestehen, beispielsweise aus Glasfasern, etwa in Form von Faserbündeln oder Fasergeweben, die in der Regel in eine polymere Matrix eingebettet sind.

Die innere Auskleidung besteht im Stand der Technik üblicherweise aus einem Polyolefin wie Polyethylen, das auch vernetzt sein kann, aus einem Polyamid wie PA11 oder PA12 oder aus Polyvinylidenfluorid (PVDF).

Polyethylen hat den Nachteil, im Kontakt mit Rohöl oder Erdgas stark zu quellen und dann zu kriechen. Zudem permeiert das beförderte unpolare Medium stark durch die Polyethylenwandung nach außen. Aus diesem Grunde wird Polyethylen in der Regel nicht für Leitungen mit direktem Kontakt zu Produktströmen eingesetzt, sondern überwiegend für sogenannte Wasserinjektionsleitungen:
Polyamide wie PA11 oder PA12 sind wegen ihrer sehr guten mechanischen Eigenschaften, der exzellenten Beständigkeit gegenüber Kohlenwasserstoffen und der nur geringen Quellung als Material für die innere Auskleidung sehr gut geeignet. Die besondere Eignung von Polyamiden wurde in der Veröffentlichung OTC 5231 "Improved Thermoplastic Materials for Offshore Flexible Pipes" detailliert beschrieben. Sie können jedoch nur bis maximal ca. 70 °C eingesetzt werden, da bei höheren Temperaturen zunehmende Hydrolyse durch das im Rohöl bzw. Erdgas enthaltene Prozesswasser eintritt. Durch diese Hydrolyse wird das Molekulargewicht des Polyamids so stark verringert, dass sich die mechanischen Eigenschaften erheblich verschlechtern und das Rohr schließlich versagt. Ein detailliertes Prüfprozedere zur Bestimmung der Hydrolyseeigenschaften wird in der API 17TR2 für PA11 beschrieben und kann für PA12 gleichermaßen angewandt werden.

PVDF wird bis maximal 130 °C eingesetzt. Es ist je nach Modifikation steif bei geringer Druckverformbarkeit auch bei höheren Temperaturen bis etwa 130 °C. Bei Temperaturen oberhalb 130 °C ist bei einem Abfall des Innendrucks jedoch mit Blistering und Microfoaming zu rechnen. PVDF quillt insbesondere in überkritischem CO₂ stark bis etwa 25 %; das beim Druckabfall auftretende Blistering resultiert aus der guten Permeationssperre, die gleichbedeutend mit schlechter Diffusion ist. Dabei tritt innerhalb der Schicht lokale Gasdesorption auf, wobei die Kohäsionsfestigkeit des Materials übertroffen wird.

In vielen Fällen tritt Rohöl oder Erdgas mit Temperaturen von deutlich über 130 °C aus der Quelle aus. Um derartige Quellen über flexible Rohrleitungen zu erschließen, ist ein vorgeschalteter Prozessschritt zur Kühlung des Mediums nötig. Es wäre daher wünschenswert, ein Unbonded Flexible Pipe zur Verfügung zu haben, das auch bei höheren Temperaturen eingesetzt werden kann, um diesen Prozessschritt einsparen zu können.

In der WO 2008/125807 wird ein flexibles Rohr zur Beförderung beispielsweise von heißem Methanol in einem Umbilical beschrieben, das eine innere Schicht aus PEEK oder Polyphenylensulfid enthält. Der Innendurchmesser dieses Rohres liegt im Bereich von 4 bis 500 mm, während die Schichtdicke des PEEK 0,7 bis 5 mm beträgt. Da bei Unbonded Flexible Pipes jedoch eine Schichtdicke von mindestens 2 mm und typischerweise 3 bis 20 mm benötigt wird, um die für Montage und Handhabung nötige mechanische Stabilität der Schicht zu gewährleisten, würde hier bei der bekannten hohen Steifigkeit von PEEK ein Rohr resultieren, das nicht ausreichend flexibel ist, um sich mit vertretbarem Radius auf eine Trommel wickeln zu lassen.

Eine andere Ausführungsform eines flexiblen mehrschichtigen Rohres mit einem PEEK-Innenrohr ist in der WO 99/67561 beschrieben. Das Rohr besteht aus Polymer- und Textilschichten, die über die Länge des Rohres hinweg konstruktiv miteinander verbunden sind; die typische Wanddicke des Innenrohrs beträgt 6 bis 12 mm.

In der WO 2006/047774 wird ein mehrschichtiges Rohr mit einer Schicht beschrieben, die aus einem teilaromatischen Polyamid besteht.

Die US 5 876 548 beschreibt ein flexibles Metallrohr, bei dem auf einer Karkasse eine Elastomerschicht und darüber eine Schicht aus einem schrumpffähigen Polymer aufgebracht ist; neben einer Vielzahl anderer Möglichkeiten wird hierfür auch PEEK genannt.

In der WO 2005/028198 wird ein Unbonded Flexible Pipe beschrieben, bei dem die innere Auskleidung aus einer dickeren Polymerschicht und einem dünneren Film mit Sperreigenschaften besteht. Für die Materialien der dickeren Polymerschicht und des Films sind zwei umfangreiche identische Listen angegeben; der Film kann darüber hinaus aus Metall bestehen. In beiden Listen werden PEEK, PEKK und Polyphenylensulfid (PPS) genannt.

Das Rohr der US 5 934 335 enthält eine Schicht, die aus PFA bestehen kann. PFA kriecht jedoch bei höheren Temperaturen stark und füllt je nach Druckrichtung die Zwischenräume zwischen den gelenkigen Bereichen der Karkasse oder der nach außen anschließenden Armierungsschicht aus, was die Flexibilität des Rohrs erheblich verringert. In den deformierten Bereichen bilden sich darüber hinaus Spannungsrisse, die zur Zerstörung der inneren Auskleidung führen können. Die US 5 934 335 empfiehlt daher, die Zwischenräume der Karkasse mit einem Elastomer zu füllen.

Die Aufgabe der Erfindung besteht darin, eine innere Auskleidung bereitzustellen, die bei höheren Betriebstemperaturen, beispielsweise oberhalb von 130 °C, beständig ist und zudem die Flexibilität des Rohrs nicht übermäßig verringert.

Die Aufgabe wird durch ein Unbonded Flexible Pipe gelöst, das eine innere Auskleidung besitzt, die folgende Schichten enthält:
a) Mindestens eine Schicht, deren Material aus einer Formmasse basierend auf einem Polymeren besteht, das ausgewählt ist aus der Gruppe
   - Polyarylenetherketon,
   - Polyphenylsulfon,
   - Polyphenylensulfid,
   - Polyarylenetherketon/Polyphenylensulfid-Blend und
   - teilaromatisches Polyamid, dessen Dicarbonsäureanteil zu 5 bis 100 Mol-% von aromatischer Dicarbonsäure mit 8 bis 22 C-Atomen herrührt und das einen Kristallitschmelzpunkt Tₘ von mindestens 260 °C, vorzugsweise von mindestens 270 °C und besonders bevorzugt von mindestens 280 °C besitzt, bestimmt gemäß ISO 11357 beim 2. Aufheizen;
b) mindestens eine Schicht, deren Material aus einer Fluorpolymer-Formmasse besteht, wobei die innere Auskleidung dreischichtig ist mit der Schichtenfolge a/b/a.

Bei dieser dreischichtigen Sandwichstruktur können die beiden Schichten gemäß a) aus unterschiedlichen Materialien bestehen. Beispielsweise besteht die äußere Schicht gemäß a) aus dem billigeren Polyamid oder Polyphenylensulfid, während die innere Schicht gemäß a) aus Polyarylenetherketon, Polyphenylensulfid oder einem Polyarylenetherketon/Polyphenylensulfid-Blend besteht.

Die einzelnen Schichten können über Haftvermittler miteinander verbunden sein; geeignete Haftvermittler sind dem Fachmann bekannt. Eine gewisse Anfangshaftung erleichtert die Herstellung des Unbonded Flexible Pipe; für den Betrieb ist eine Schichtenhaftung jedoch nicht unbedingt erforderlich. Sollten sich zwischen unverbundenen Schichten während des Betriebs Gase ansammeln, können diese mittels geeigneter konstruktiver Maßnahmen abgeleitet werden. Das Ansammeln von Gasen kann in der bevorzugten Ausführungsform jedoch stark verringert werden, wenn die Schicht gemäß b) innenseitig angeordnet ist.

In einer möglichen Ausführungsform befindet sich auf der inneren Seite der inneren Auskleidung eine Karkasse. Derartige Karkassen und ihre Ausführung sind Stand der Technik. In einer weiteren möglichen Ausführungsform enthält das Unbonded Flexible Pipe keine Karkasse, vor allem dann, wenn es nicht unter hohen Außendrucken betrieben werden soll.

Das Unbonded Flexible Pipe enthält darüber hinaus auf der Außenseite der inneren Auskleidung eine oder mehrere Armierungsschichten, die üblicherweise aus spiralförmig angeordneten Stahldrähten, Stahlprofilen oder Stahlbändern bestehen. Die Ausführung dieser Armierungsschichten ist Stand der Technik. Vorzugsweise ist mindestens eine dieser Armierungsschichten so aufgebaut, dass sie dem Innendruck standhält, und mindestens eine weitere dieser Armierungsschichten ist so aufgebaut, dass sie Zugkräften standhält. An die Armierungsschicht bzw. Armierungsschichten kann sich eine äußere Umhüllung anschließen, üblicherweise in Form eines Rohres oder Schlauches aus einer thermoplastischen Formmasse oder einem Elastomer.

Das Polyarylenetherketon der Schicht gemäß a) enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphdnylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei stellen mindestens 50 %, bevorzugt mindestens 70 % und besonders bevorzugt mindestens 80 % der Gruppen X eine Carbonylgruppe dar, während mindestens 50 %, bevorzugt mindestens 70 % und besonders bevorzugt mindestens 80 % der Gruppen Y aus Sauerstoff bestehen.

In der bevorzugten Ausführungsform bestehen 100 % der Gruppen X aus Carbonylgruppen und 100 % der Gruppen Y aus Sauerstoff. In dieser Ausführungsform kann das Polyarylenetherketon beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

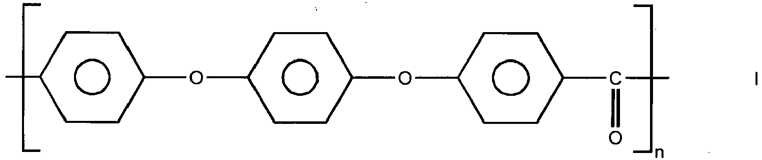

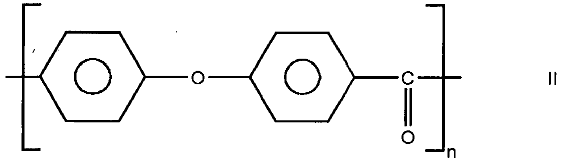

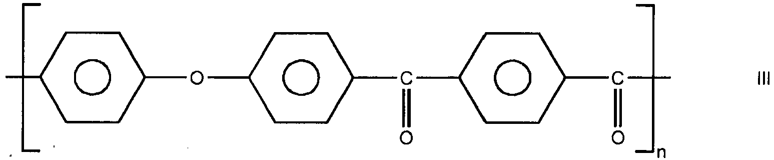

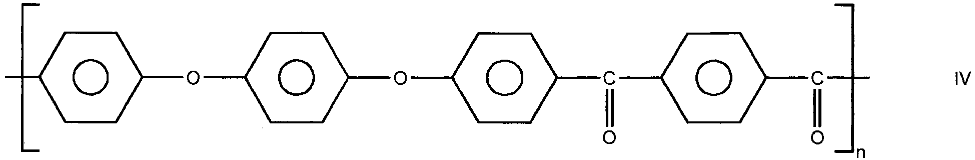

Das Polyarylenetherketon ist teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt.

Polyphenylsulfon (PPSU) wird beispielsweise unter dem Handelsnamen Radel^{®} von Solvay Advanced Polymers produziert. Es kann aus 4,4'-Dihydroxybiphenyl und 4,4'-Dichlordiphenylsulfon durch nucleophile Substitution hergestellt werden.

Das Polyphenylensulfid enthält Einheiten der Formel

(-C₆H₄-S-);

Vorzugsweise besteht es zu mindestens 50 Gew.-%, mindestens 70 Gew.-% bzw. mindestens 90 Gew.-% aus diesen Einheiten. Die restlichen Einheiten können solche sein, wie sie oben im Falle des Polyarylenetherketons angegeben sind, oder tri- oder tetrafunktionelle Verzweigereinheiten, die aus der Mitverwendung beispielsweise von Trichlorbenzol oder Tetrachlorbenzol bei der Synthese resultieren. Polyphenylensulfid ist in einer Vielzahl von Typen bzw. Formmassen handelsüblich.

Bei den Polyarylenetherketon/Polyphenylensulfid-Blends können beide Komponenten in jedem denkbaren Mischungsverhältnis vorliegen, so dass der Zusammensetzungsbereich von reinem Polyarylenetherketon bis zu reinem Polyphenylensulfid lückenlos überstrichen wird. Im Allgemeinen enthält das Blend mindestens 0,01 Gew.-% Polyarylenetherketon bzw. mindestens 0,01 Gew.-% Polyphenylensulfid. In einer bevorzugten Ausführungsform enthält das Blend mindestens 50 Gew.-% Polyarylenetherketon.

Das Polyamid ist herstellbar aus einer Kombination von Diamin und Dicarbonsäure, gegebenenfalls unter Zusatz einer ω-Aminocarbonsäure oder dem entsprechenden Lactam. Geeignete Typen sind beispielsweise PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam.

Die Formmasse der Schicht gemäß a) kann die üblichen Hilfs- und Zusatzstoffe sowie gegebenenfalls weitere Polymere enthalten, im Falle des Polyarylenetherketons beispielsweise Fluorpolymere wie PFA (ein Copolymer aus Tetrafluorethen und Perfluorvinylmethylether), Polyimid, Polyetherimid, LCP wie beispielsweise flüssigkristalliner Polyester, Polysulfon, Polyethersulfon, Polyphenylsulfon, Polybenzimidazol (PBI) oder weitere hochtemperaturbeständige Polymere, im Falle des Polyphenylensulfids beispielsweise Copolymere bzw. Terpolymere von Ethylen mit polaren Comonomeren und im Falle des teilaromatischen Polyamids ein aliphatisches Polyamid und/oder einen Schlagzähmodifier. Die Polyamidformmasse kann beispielsweise auch einen Hydrolysestabilisator enthalten. Der Anteil an Polyarylenetherketon, Polyphenylensulfid, Polyarylenetherketon/Poly-phenylensulfid-Blend bzw. teilaromatischem Polyamid an der Formmasse beträgt mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-%.

Das Fluorpolymer der Schicht gemäß b) kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Chlortrifluorethylen-Perfluoralkylvinylether-Tetrafluorethylen-Copolymer (CPT), ein Tetrafluorethylen-Hexafluorpropen-Vinylidenfluorid-Copolymer (THV), ein Tetrafluorethylen-Hexafluorpropen-Copolymer (FEP) oder ein Tetrafluorethylen-Perfluoralkylvinylether-Copolymer (PFA) sein. In Frage kommen auch Copolymere auf Basis von Vinylidenfluorid, die bis zu 40 Gew.-% andere Monomere aufweisen wie beispielsweise Trifluorethylen, Chlortrifluorethylen, Ethylen, Propen und Hexafluorpropen.

Die Formmasse der Schicht gemäß b) kann die üblichen Hilfs- und Zusatzstoffe enthalten. Der Anteil an Fluorpolymer beträgt mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-%.

Der Innendurchmesser der inneren Auskleidung beträgt in der Regel mindestens 30 mm, mindestens 40 mm, mindestens 50 mm bzw. mindestens 60 mm sowie maximal 900 mm, maximal 800 mm, maximal 700 mm bzw. maximal 620 mm; in Einzelfällen kann er aber auch darüber oder darunter liegen. Die Gesamtwanddicke der inneren Auskleidung beträgt in der Regel mindestens 2 mm, mindestens 2,5 mm, mindestens 3 mm, mindestens 4 mm bzw. mindestens 5 mm sowie maximal 50 mm, maximal 40 mm, maximal 30 mm, maximal 25 mm, maximal 20 mm bzw. maximal 16 mm; auch sie kann in Einzelfällen darüber oder darunter liegen. Die Dicke einer Schicht gemäß a) beträgt 0,1 bis 10 mm und bevorzugt 0,2 bis 8 mm.

Die innere Auskleidung wird gemäß dem Stand der Technik durch Coextrusion, durch Wickelextrusion der einzelnen Schichten oder gegebenenfalls durch Wickeln von Tapes hergestellt.

Ein derartiges Unbonded Flexible Pipe kann vorteilhaft bei Einsatztemperaturen oberhalb von 130 °C bis in den Bereich um 200 °C und gegebenenfalls darüber betrieben werden. Durch die Verwendung der Schicht gemäß a) ist die Gefahr, dass das Material der inneren Auskleidung in die Zwischenräume zwischen den gelenkigen Bereichen der Karkasse oder der nach außen anschließenden Armierungsschicht kriecht, minimiert. Die Flexibilität des Rohrs bleibt somit erhalten; eine Bildung von Spannungsrissen in deformierten Bereichen, was zur Zerstörung der inneren Auskleidung führen könnte, findet nicht statt.

## Patentansprüche

1. Flexibles Rohr mehrschichtigen Aufbaus mit unverbundenen Schichten, das eine innere Auskleidung besitzt, die folgende Schichten enthält:
a) Mindestens eine Schicht, deren Material aus einer Formmasse basierend auf einem Polymeren besteht, das ausgewählt ist aus der Gruppe
- Polyarylenetherketon,
- Polyphenylsulfon,
- Polyphenylensulfid,
- Polyarylenetherketon/Polyphenylensulfid-Blend und
- teilaromatisches Polyamid, dessen Dicarbonsäureanteil zu 5 bis 100 Mol-% von aromatischer Dicarbonsäure mit 8 bis 22 C-Atomen herrührt und das einen Kristallitschmelzpunkt Tₘ von mindestens 260 °C besitzt, bestimmt gemäß ISO 11357 beim 2. Aufheizen;
b) mindestens eine Schicht, deren Material aus einer Fluorpolymer-Formmasse besteht, wobei die innere Auskleidung dreischichtig ist mit der Schichtenfolge a/b/a.

2. Flexibles Rohr gemäß Anspruch 1,
**dadurch gekennzeichnet,**
**dass** die innere Auskleidung ein Rohr ist.

3. Flexibles Rohr gemäß einem der vorhergehenden Ansprüche,
**dadurch gekennzeichnet,**
**dass** es neben der inneren Auskleidung eine oder mehrere Schichten enthält, die ausgewählt sind aus
- einer innenliegenden Karkasse,
- einer oder mehrerer außenliegender Armierungsschichten sowie
- einer äußeren Umhüllung.

## Claims

1. Flexible pipe of multilayer structure with unbonded layers, where the pipe has an interior lining which comprises the following layers:
a) at least one layer of which the material is composed of a moulding composition based on a polymer selected from the following group:
- polyarylene ether ketone,
- polyphenyl sulphone,
- polyphenylene sulphide,
- polyarylene ether ketone/polyphenylene sulphide blend and
- semiaromatic polyamide, where from 5 to 100 mol% of the dicarboxylic acid content thereof derives from an aromatic dicarboxylic acid having from 8 to 22 carbon atoms, and which has a crystallite melting point Tₘ of at least 260°C, determined according to ISO 11357 in the 2nd heating procedure;
b) at least one layer of which the material is composed of a fluoropolymer moulding composition, where the interior lining is a three-layer lining with the following layer sequence: a/b/a.

2. Flexible pipe according to Claim 1
**characterized in that**
the interior lining is a tube.

3. Flexible pipe according to either of the preceding claims,
**characterized in that**
it comprises, alongside the interior lining, one or more layers selected from
- an internal carcass,
- one or more external reinforcing layers, and also
- an exterior sheath.

## Revendications

1. Tuyau flexible à structure multicouche avec des couches non assemblées, qui comporte un habillage intérieur qui comprend les couches suivantes:
a) au moins une couche, dont le matériau est constitué par une masse de moulage à base d'un polymère, qui est choisi dans le groupe
- polyarylène éther cétone,
- polyphényle sulfone,
- sulfure de polyphénylène,
- mélange de polyarylène éther cétone/sulfure de polyphénylène, et
- polyamide partiellement aromatique, dont la fraction d'acide dicarboxylique provient pour 5 à 100 % molaires d'acide dicarboxylique aromatique avec 8 à 22 atomes de carbone et qui présente un point de fusion cristallin Tₘ d'au moins 260°C, déterminé selon la norme ISO 11357 au 2^{ème} chauffage;
b) au moins une couche, dont le matériau est constitué par une masse de moulage en fluoropolymère, dans lequel l'habillage intérieur est réalisé en trois couches avec les couches disposées dans l'ordre a/b/a.

2. Tuyau flexible selon la revendication 1, **caractérisé en ce que** l'habillage intérieur est un tuyau.

3. Tuyau flexible selon l'une quelconque des revendications précédentes, **caractérisé en ce qu'**il contient, en plus de l'habillage intérieur, une ou plusieurs couches qui sont choisies parmi
- une carcasse située à l'intérieur,
- une ou plusieurs couches d'armature situées à l'extérieur, ainsi que
- une gaine extérieure.
